# EUROPEAN PATENT APPLICATION

(11) **EP 4 840 825 A1**
(43) Date of publication of application: **18.11.2026**
(21) Application number: 25177082.2
(22) Date of filing: 16.05.2025
(51) Int. Cl.: C01G 53/506, C01G 53/05, C01G 53/42, C01G 53/502, C01G 53/84, H01M 4/131, H01M 4/485, H01M 4/505, H01M 4/525, H01M 10/0525, H01M 4/02

(54) **PROCESS FOR THE MANUFACTURE OF A SURFACE-DOPED CATHODE ACTIVE MATERIAL, AND SURFACE-DOPED CATHODE ACTIVE MATERIAL**

(71) Applicant: BASF SE, 67056 Ludwigshafen am Rhein (DE); Technische Universität München, 80333 München (DE)
(72) Inventor: WIRTZ, Maike, 67056 Ludwigshafen am Rhein (DE); ERK, Christoph, 67056 Ludwigshafen am Rhein (DE); GASTEIGER, Hubert, 80333 München (DE); TOMUSCHAT, Carlo, 80333 München (DE); KIPFER, Tim, 80333 München (DE)
(74) Representative: BASF IP Association

(57) **Abstract**

Particulate cathode active materials having a core of the composition Li_{(1+z)}TM_{(1-z)}O₂ wherein TM is Ni_{1-x-y}CoₓM_{y} and z is in the range of from -0.05 to +0.02, and zero ≤ x ≤ 0.05 and zero ≤ y ≤ 0.10 and M is selected from at least one of Mn or Al, wherein Co is enriched at the outer surface of the core of said cathode active material particles that are in the form of single crystals with an equivalent particle diameter (*d*_{eq}) of at least 0.5 µm and up to 5 µm

## Description

The present invention is directed towards particulate cathode active materials having a core of the composition Li_{(1+z)}TM_{(1-z)}O₂ wherein z is in the range of from -0.05 to +0.02 and TM is Ni_{1-x-y}CoₓM_{y}, and zero ≤ x ≤ 0.05 and zero ≤ y ≤ 0.10 and M is selected from at least one of Mn or Al, wherein Co is enriched at the outer surface of the core of said cathode active material particles that are in the form of single crystals with an equivalent particle diameter *d*_{eq} of at least 0.5 µm and up to 5 µm.

Lithium-ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

Lithiated transition metal oxides are currently used as electrode active materials for lithium-ion batteries. Extensive research and developmental work have been performed in the past years to improve properties like charge density, specific energy, but also other properties like the reduced cycle life and capacity loss that may adversely affect the lifetime or applicability of a lithium-ion battery. Additional effort has been made to improve manufacturing methods.

Many electrode active materials discussed today are of the type of lithiated nickel-cobalt-manganese oxide ("NCM materials") or lithiated nickel-cobalt-aluminum oxide ("NCA materials").

In a typical process for making cathode materials for lithium-ion batteries, first a so-called precursor is being formed by co-precipitating the transition metals as carbonates, oxides or preferably as (oxy)hydroxides. The precursor is then mixed with a lithium compound such as, but not limited to LiOH, Li₂O or Li₂CO₃ and calcined (fired) at high temperatures. Lithium compound(s) can be employed as hydrate(s) or in dehydrated form. The calcination - or firing - generally also referred to as thermal treatment or heat treatment of the precursor - is usually carried out at temperatures in the range of from 600 to ,000 °C. In cases where hydroxides or carbonates are used as precursors a removal of water or carbon dioxide occurs first and is followed by the lithiation reaction. The thermal treatment is performed in the heating zone of an oven or kiln. In case very high temperatures are applied or flux agents, so called monoliths or single-crystals are obtained.

Extensive research has been performed on improvements of various properties of cathode active materials, such as energy density, charge-discharge performance such as capacity fading, and the like. However, many cathode active materials still suffer from limited cycle life and voltage fade.

It was therefore an objective of the present invention to provide electrochemical cells and batteries with high cycle life. It was further an objective to provide a process for making cathode active materials that show high cycle life. It was furthermore an objective to provide cathode active materials with a high cycle life.

Accordingly, the particulate cathode active material as defined at the outset has been found, hereinafter also defined as inventive cathode active materials. Inventive cathode materials are particulate cathode active materials having a core of the composition Li_{(1+z)}TM_{(1-z)}O₂ wherein z is in the range of from -0.05 to +0.02 and TM is Ni_{1-x-y}CoₓM_{y} and zero ≤ x ≤ 0.05 and zero ≤ y ≤ 0.10 and M is selected from at least one of Mn or Al, wherein Co is enriched at the outer surface of the core of said cathode active material particles that are in the form of single crystals with an equivalent particle diameter *d*_{eq} of at least 0.5 µm and up to 5 µm. Said cobalt enriched part is also referred to as shell.

In the core,
z is in the range of from -0.05 to +0.02, preferably from -0.005 to +0.01.
TM is Ni_{1-x-y}CoₓM_{y} wherein
zero ≤ x ≤ 0.05 and
zero ≤ y ≤ 0.10, preferably zero ≤ y ≤ 0.05, and
M is selected from at least one of Mn or Al, preferably a combination of Mn and Al.
In a preferred embodiment, zero < x + y ≤ 0.10. In another preferred embodiment, x + y = zero.

In a preferred embodiment, the weight ratio of core to shell is the range of from 97:3 to 4:1.

Some metals are ubiquitous such as sodium, calcium or zinc and traces of them are virtually present everywhere, but such traces will not be taken into account in the description of the present invention. Traces in this context will mean amounts of 0.05 mol-% or less, referring to the total metal content of TM.

In one embodiment of the present invention, inventive cathode active materials have a specific surface (BET) in the range of from 0.25 to 2.5 m²/g or even up to 3 m²/g, determined according to DIN-ISO 9277:2003-05, preferred are 0.5 to 1.5 m²/g.

The equivalent particle diameter (d_{eq}), also referred to as d_{eq}, is the number-based average particle diameter as determined by SEM image segmentation of the top-view. A significant number, for example 100 representative particles of a representative sample are assessed by SEM. If they have irregular shape, at first for each of them an average particle diameter is determined by calculating the average of the largest and the smallest diameter to furnish the average individual particle diameter. Then, the average individual particle diameter of said particles, for example 100, is calculated.

In another embodiment of the present invention, inventive cathode active materials are so-called monolithic materials. Monolithic materials are also termed single-crystal materials, and they do not exhibit primary particles as described above. Monolithic materials preferably have an irregular shape. Preferably, such monolithic materials have an average particle diameter in the range of from 0.5 to 5 µm and a specific surface in the range of from 0.5 to 2.5 m²/g.

In one embodiment of the present invention, inventive cathode active materials have a mono-modal particle diameter distribution.

In one embodiment of the present invention, the equivalent particle diameter (*d*_{eq}) is at most 1.5 µm.

In one embodiment of the present invention, the Co atomic surface concentration *x*_{Co,surface} as measured by X-ray photoelectron spectroscopy is *x*_{Co,surface} is at least 10 mol-%, referring to all metals other than lithium in the shell preferably at least 20 mol-%, wherein the shell has a thickness of 10 nm, preferably at least 11 mol-%.

In one embodiment of the present invention, the shell is essentially formed by a Li-Ni-Co oxide with significantly more Co than in the core, e.g., 10 to 50 mol-%, preferably 20 to 40 mol-%, referring to the metals other than lithium. Preferably, said Li-Ni-Co oxide has the formula Li(Ni₁₋ᵣCoᵣ)O₂ with r being in the range of from 0.1 to 0.50, preferably 0.2 to 0.4.

In one embodiment of the present invention, particles of inventive cathode active materials display an enrichment of aluminum at the outer surface, for example in the form of Al₂O₃ or LiAlO₂.

In addition, the process defined at the outset has been found, hereinafter also referred to as "inventive process". The inventive process comprises at least seven steps, step (a), step (b), step (c), step (d), step (e), step (f) and step (g) or, in brief, (a), (b), (c), (d), (e), (f) and (g). Said steps are described in more detail below.

Step (a) includes providing a hydroxide TM(OH)₂, wherein said hydroxide has an average particle diameter (d50) in the range of 1 to 16 µm and TM is Ni_{1-x-y}CoₓM_{y}, and the variables M, x and y are as defined above.

In the context of the present invention, the term hydroxide TM(OH)₂ also includes non-stoichiometric oxyhydroxides of TM in which parts of TM are oxidized to an oxidation state of +III. Such partial oxidation may easily occur when exposing TM(OH)₂ to air, for example during drying.

The average particle diameter (d50) is strictly speaking a median value. In the context of the present invention, however, it is referred to as average (or mean) particle diameter. It is determined by LASER scattering and refers to the volume average. In addition, the average diameter (d50) refers to the secondary particles, see below. It is in the range of from 1 to 16 µm, preferably 1.5 to 15.7 µm.

Some metals are ubiquitous such as sodium, calcium or zinc and traces of them virtually present everywhere, but such traces will not be taken into account in the description of the present invention. Traces in this context will mean amounts of 0.05 mol-% or less, referring to the total metal content TM. In addition, trace amounts of sulfate that may stem from the manufacture of said hydroxide or of carbonate that may stem from a CO₂ uptake are neglected in this context as well.

The particles of hydroxide TM(OH)₂ preferably have a spherical or spheroidal shape, and they are preferably agglomerates of platelet-shaped primary particles.

Step (b) includes mixing said hydroxide TM(OH)₂ with a Li source wherein the molar ratio of Li/TM is in the range of 0.98 to 1.05, preferably 1.01 to 1.03. During step (c), some lithium may be lost, and the slight excess is meant to compensate for this loss.

Suitable sources of lithium are LiOH, Li₂O or Li₂CO₃ and Li₂O₂ and combination of at least two of the aforementioned. Source of lithium may contain water of crystallization or hydrate water, e.g., LiOH·H₂O.

In one embodiment of the present invention, the mixing has a duration of 5 minutes to 2 hours.

Step (b) may be performed in a ball mill, a high-speed mixer or high-shear mixer or acoustic mixer. In laboratory experiments, mixing may be performed in a mortar with a pestle.

A mixture is obtained from step (b).

Step (c) includes heat-treating the mixture obtained from step (b) at a temperature in the range of 700 to 900°C, preferably 725 to 850°C, thereby obtaining an intermediate powder. In the course of step (d), particle growing of the primary particles is observed.

Step (c) is preferably performed in an atmosphere of oxygen or oxygen-enriched air, for example with at least 60 vol-% of oxygen, preferably 80 vol-% of oxygen and more preferably at least 90 vol-% oxygen. Even more preferred is pure oxygen.

Step (c) may be performed in a rotary kiln, a roller hearth kiln, or a pusher kiln. For laboratory experiments, muffle ovens are suitable as well.

In one embodiment of the present invention, the temperature is ramped up before reaching the desired temperature of from 700 to 900°C, preferably 725 to 850°C. For example, first the mixture of TM(OH)₂ and source of lithium is heated to a temperature to 350 to 550°C and held constant for a time of 10 min to 4 hours, and then it is raised to 700°C up to 900°C, preferably 725 to 850°C.

In one embodiment of the present invention, heating the mixture to the target temperature is performed with a heating rate of from 0.1 to 10°C/min, preferably 1 to 8°C/min.

In one embodiment of the present invention, step (c) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (c) is performed under a forced flow of gas, for example air, oxygen and oxygen-enriched air. Such stream of gas may be termed a forced gas flow. Such stream of gas may have a specific flow rate in the range of from 0.5 to 15 m³/h·kg material according to general formula Li_{1+z}TM_{1-z}O₂. The volume is determined under normal conditions: 298 Kelvin and 1 atmosphere. Said forced flow of gas is useful for removal of gaseous cleavage products such as water and carbon dioxide.

In one embodiment of the present invention, step (c) has a duration in the range of from one hour to 30 hours. Preferred are 5 to 12 hours. The cooling time and the time through reaching the target temperature is neglected in this context.

After thermal treatment, the intermediate powder so obtained is cooled down before further processing.

Step (d) includes wet milling of the intermediate powder obtained from step (c) in an aqueous or alcoholic solvent in a ball mill, on laboratory scale (20 g or less) preferably in a planetary micro-mill, followed by a drying step, thereby obtaining a deagglomerated intermediate powder.

In one embodiment of the present invention, alcoholic solvents are selected from alkanols with one to 4 carbon atoms per molecule, such as methanol, ethanol, isopropanol, n-propanol, n-butanol, iso-butanol or sec.-butanol. Mixtures of two or more C₁-C₄-alkanols are suitable as well.

Combinations of water and an alcohol are feasible as well.

Alcoholic solvent may be pure alcohol or pure mixture of alcohol or bear minor amounts of a non-alcoholic solvent, e.g., water or an alcohol-miscible organic solvent, for example N-methyl pyrrolidone ("NMP"). Preferred is water. The term "minor amounts" in this context refers to up to 25 vol-%, referring to total solvent in step (d), preferably up to 10 vol-%. Especially, it is not required to specifically dry the respective alcoholic solvent or to remove any denatonium.

In one embodiment of the present invention, a weight ratio of aqueous or alcoholic solvent to intermediate powder is in the range of from 3:2 to 1:3, preferably 1:1 to 1:2.

In one embodiment of the present invention, an energy input in the range of from 0.3 MJ to 80 MJ/kg is introduced in step (d), preferably 1 to 10 MJ/kg.

By the wet-milling, the intermediate powder is deagglomerated. After the wet-milling, the alcohol or water is removed in a drying step, for example at 70 to 150°C, at ambient pressure (1 bar abs) or under reduced pressure, for example 50 to 800 mbar (abs.).

A de-agglomerated intermediate powder is obtained from step (d).

Step (e) includes heat-treating the deagglomerated intermediate powder obtained from step (d) at a temperature in the range of 580 to 770°C, preferably 600 to 750°C, thereby obtaining a base cathode active material.

Step (e) may be performed in a rotary kiln, a roller hearth kiln, or a pusher kiln. For laboratory experiments, muffle ovens are suitable as well.

The duration of step (e) may be in the range of from 30 minutes to 10 hours. The cooling, preferably natural cooling at the end of step (e) is neglected.

In one embodiment of the present invention, heating of deagglomerated intermediate powder obtained from step (d) to the target temperature is performed with a heating rate of from 0.1 to 10°C/min, preferably 1 to 8°C/min.

A base cathode active material is obtained from step (e).

Step (f) includes combining a source of Co dissolved in alcoholic solvent with the base cathode active material obtained from step (e) by incipient-wetness impregnation, aiming to achieve an overall average cobalt composition of up to 7.5 mol-%, preferably up to 5 mol% with respect to TM, and a subsequent drying step, thereby obtaining another intermediate powder. A minimum amount of cobalt is 0.3 mol-% with respect to TM.

Examples of suitable sources of cobalt are cobalt acetate, CoSO₄, Co(NO₃)₂, COCl₂ including the respective hydrates.

The amount of source of cobalt is selected in a way that a maximum of 5 mol-% of cobalt are added with respect to TM, preferably up to 3 mol-%.

Suitable alcohols as solvents are selected from alkanols with one to 4 carbon atoms per molecule, such as methanol, ethanol, isopropanol, n-propanol, n-butanol, iso-butanol or sec.-butanol. Mixtures of two or more C₁-C₄-alkanols are suitable as well.

Incipient wetness is meant that the volume of solution of cobalt compound in step (f) is about the pore volume of base cathode active material from step (e). The pore volume may be determined by N₂ absorption methods or by adding water or a C₁-C₄-alkyl alcohol such as methanol, ethanol, isopropanol or n-butanol to the respective bas material and visual inspection whether the material appeared to be wet. The solution of cobalt compound is mixed with base cathode active material from step (e). On laboratory scale, for example with 10 g or less, a mortar with pestle, a watch glass or a beaker is a suitable vessel for mixing. On a larger scale, a round bottom flask or a rotary drum is more suitable. A suitable duration is in the range of from 1 second to 10 minutes. Preferably, the alcohol or water is then removed by drying, for example at 70 to 150°C, at ambient pressure (1 bar abs) or under reduced pressure, for example 50 to 800 mbar (abs.).

Said intermediate powder from step (f) may serve as cathode active material after a thermal treatment, for example at 650 to 750°C.

If manufacture of a cathode active material with additional Al enrichment at the outer surface of the core is desired, a source of an Al compound is added, for example a solution of Al(NO₃)₃ in water or methanol, without or with water of crystallization. Said addition is preferably performed in step (f).

In an optional but preferred step,
(g) said intermediate powder from step (f) is mixed with a Li source wherein the molar ratio of Li/Co with respect to the molar amount of Co from step (f) is in the range of 0.98 to 1.02, followed by a heat-treatment step at 650 to 750°C.

Examples of suitable Li sources in a step (g) are Li₂O₂, LiOH, Li₂CO₃, and their hydrates.

Heating in step (g) may be performed under air, oxygen, oxygen-enriched air, nitrogen, nitrogen-enriched air or a noble gas, for example argon. Nitrogen and air are preferred. In other embodiments, step (g) is performed *in vacuo.*

In one embodiment of the present invention, heating in step (g) has a duration in the range of from 15 minutes to 24 hours, preferably 1 to 15 hours. An inventive cathode active material is obtained from step (d).

In one embodiment of the present invention, steps (d) to (g) are carried out under an atmosphere with reduced CO₂ content, e.g., a carbon dioxide content in the range of from 0.01 to 500 ppm by weight, preferred are 0.1 to 50 ppm by weight. The CO₂ content may be determined by, e.g., by optical methods using infrared light. It is even more preferred to perform steps (d) to (g) under an atmosphere with a carbon dioxide content below detection limit for example with infrared-light based optical methods.

Heating in step (g) may be carried out in a fluidized bed or in a furnace or oven, for example in a rotary kiln, in a roller hearth kiln or in a pusher kiln. On laboratory scale, with amounts of 20 g or less, muffle ovens or box-type furnaces are suitable as well.

In one embodiment of the present invention, heating in step (g) is performed under an atmosphere of oxygen or oxygen-enriched air, for example in a volume ratio of O₂:air of 4:1 or more.

In embodiments where step (g) is not performed, the above heating is preferably performed on a material as obtained from step (f) directly.

Another embodiment are electrodes comprising at least one electrode active material made according to the present invention. They are particularly useful for lithium ion batteries. Lithium ion batteries comprising at least one electrode made accordingly exhibit a good discharge behavior. Electrodes comprising at least one electrode active material made according to the present invention contain
(A) at least one electrode active material made according to the present invention,
(B) carbon in electrically conductive form,
(C) a binder material, also referred to as binders or binders (C), and, preferably,
(D) a current collector.

In a preferred embodiment, such cathodes contain
(A) 80 to 98 % by weight electrode active material made according to the present invention,
(B) 0.1 to 17 % by weight of carbon,
(C) 1 to 15 % by weight of binder material, percentages referring to the sum of (A), (B) and (C).

Electrodes made according to the present invention can comprise further components. They can comprise a current collector, such as, but not limited to, an aluminum foil. They can further comprise conductive carbon and a binder.

Electrodes made according to the present invention contain carbon in electrically conductive modification, in brief also referred to as carbon (B). Carbon (B) can be selected from soot, active carbon, carbon nanotubes, graphene, and graphite, and from combinations of at least two of the foregoing.

Suitable binders (C) are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile and glass fibers.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol-% of copolymerized ethylene and up to 50 mol-% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, C₁-C₁₀-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol-% of copolymerized propylene and up to 50 mol-% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, C₁-C₁₀-alkyl esters of (meth)acrylic acid, divinylbenzene, especially 1,3-divinylbenzene, 1,2-diphenylethylene and α-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight M_{w} in the range from 50,000 to 1,000,000 g/mol, preferably to 500,000 g/mol.

Binder (C) may be selected from cross-linked or non-cross-linked (co)polymers.

In a particularly preferred embodiment of the present invention, binder (C) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising electrode active material made according to the present invention, carbon, and binder, at least one anode, and at least one electrolyte.

Embodiments of such cathodes have been described above in detail.

Said anode may contain at least one anode active material, such as lithium, carbon (graphite), TiO₂, lithium titanium oxide, silicon or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-C₁-C₄-alkylene glycols and in particular polyethylene glycols. Polyethylene glycols can here comprise up to 20 mol-% of one or more C₁-C₄-alkylene glycols. Polyalkylene glycols are preferably polyalkylene glycols having two methyl or ethyl end caps.

The molecular weight M_{w} of suitable polyalkylene glycols and in particular suitable polyethylene glycols can be at least 400 g/mol.

The molecular weight M_{w} of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds according to the general formulae (II) and (III) 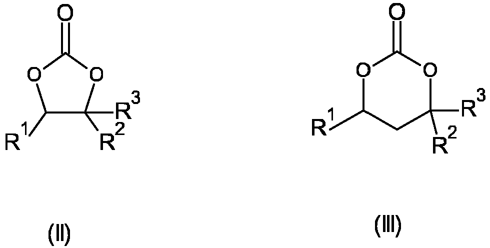 where R¹, R² and R³ can be identical or different and are selected from among hydrogen and C₁-C₄-alkyl, for example methyl, ethyl, n-propyl, isopropyl, n-butyl, isobutyl, sec-butyl and tert-butyl, with R² and R³ preferably not both being tert-butyl.

In particularly preferred embodiments, R¹ is methyl and R² and R³ are each hydrogen, or R¹, R² and R³ are each hydrogen. In another embodiment, R¹ is fluorine and R² and R³ are each hydrogen.

Another preferred cyclic organic carbonate is vinylene carbonate, formula (IV).

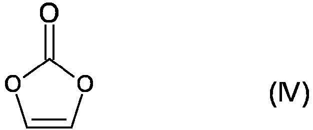

The solvent or solvents is/are preferably used in the water-free state, i.e. with a water content in the range from 1 ppm to 0.1% by weight, which can be determined, for example, by Karl-Fischer titration.

Electrolyte further comprises at least one electrolyte salt. Suitable electrolyte salts are, in particular, lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄ and salts of the general formula (CₙF₂ₙ₊₁SO₂)ₜYLi, where m is defined as follows:
t = 1, when Y is selected from among oxygen and sulfur,
t = 2, when Y is selected from among nitrogen and phosphorus, and
t = 3, when Y is selected from among carbon and silicon.

Preferred electrolyte salts are selected from among LiC(CF₃SO₂)₃, LiN(CF₃SO₂)₂, LiPF₆, LiBF₄, LiClO₄, with particular preference being given to LiPF₆ and LiN(CF₃SO₂)₂.

Batteries made according to the invention comprise one or more separators by means of which the electrodes are mechanically separated. Examples of suitable separators are glass fibers and polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Batteries according to the invention display a good discharge behavior, for example a good cycle stability.

Batteries according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

Batteries according to the invention in appliances, in particular in mobile appliances. Examples of mobile appliances are vehicles, for example automobiles, bicycles, aircrafts or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by the following working examples.

Equivalent particle diameters (*d*_{eq}) are the number-based average particle diameters as determined by SEM image segmentation of the top-view. A significant number, for example 100 representative particles of a representative sample are assessed by SEM. If they have irregular shape, at first for each of them an average particle diameter is determined by calculating the average of the largest and the smallest diameter to furnish the average individual particle diameter. Then, the average individual particle diameter of said particles, for example 100, is calculated.

Percentages are % by weight unless specifically noted otherwise.

### I. Manufacture of inventive cathode active materials

### I.1 Manufacture of cathode active materials

### I.1.1 Manufacture of a base cathode active material B-CAM.1

Step (a.1): a hydroxide Ni(OH)₂ was made by precipitation from a solution of nickel sulfate with NaOH in the presence of NH₃. The hydroxide so obtained was dried in air at 120°C.

Step (b.1): The hydroxide Ni(OH)₂ was mixed with LiOH in a molar ratio Li:Ni.1 of 1:1.02. A mixture was obtained.

Step (c.1): The resulting mixture was then filled into a crucible and heated in a muffle oven with 3 °C/min to 400 °C and held at this temperature for 4 hours. The temperature was then raised to 775°C at a rate of 3°C/min and then maintained for 6 hours. The temperature was then lowered to 700°C and maintained at 700°C for 3 hours. Then, the calcined material so obtained was cooled down to ambient temperature and was sieved using a 32 µm sieve. A powder was obtained, also referred to as Powder.1. Powder.1 had an average particle diameter D50 of 15.1 µm and the composition Li_{0.977}Ni_{1.023}O₂.

Step (d.1): An amount of 10 g of Powder.1 zirconia beads (50 g; diameter: 2 mm; Fritsch GmbH), and iso-propanol (10 g) were added to a grinding bowl (80 mL; ZrO₂ with steel casing; Fritsch GmbH). The resultant slurry was wet-milled at a grinding speed of 300 rpm for 40 minutes, followed by one step at 350 rpm for 10 minutes and another step at 400 rpm for a further 10 minutes in a planetary micro-mill (Pulverisette 7; Fritsch GmbH). The iso-propanol was removed by drying overnight at room temperature and ambient pressure and a subsequent drying step for 2 hours at 70°C at ambient pressure, and the powder was then separated from the beads by sieving.

Step (e.1): Deagglomerated powder from step (d.1) was heated with a heating rate of 3°C/min in a muffle oven to 700°C over a period of one hour under an atmosphere of pure oxygen. Then, it was allowed to cool naturally. B-CAM.1 was obtained.

### I.1.2 Manufacture of B-CAM.2

Step (a.2): a hydroxide NiCoMn(OH)₂ was made by precipitation from a solution of nickel sulfate, cobalt sulfate and manganese sulfate with NaOH in the presence of NH₃. The hydroxide so obtained was dried in air at 120°C.

Step (b.2): The hydroxide NiCoMn(OH)₂ was mixed with LiOH in a molar ratio Li:TM of 1:1.05. A mixture was obtained.

Step (c.2): The resulting mixture was then filled into a crucible and heated in a muffle oven with 3°C/min to 480°C and held at this temperature for 3 hours. The temperature was then raised to 850°C at a rate of 3°C/min and then maintained for 12 hours. The temperature was then lowered to 700°C and maintained at 700°C for 2 hours. Then, the calcined material so obtained was cooled down to ambient temperature. After calcination the material was deagglomerated using a jaw breaker and subsequently a jet-mill. After sieving (< 32µm) B-CAM.2 was obtained

### I.2 Manufacture of inventive and of comparative cathode active materials

### I.2.1 Manufacture of inventive cathode active material CAM.1.1

Step (f.1): An amount of 3.6 g Co(NO₃)₂· 6 H₂O was dissolved in 13.26 g methanol. The resultant solution was mixed with 39 g B-CAM.1 on a watch-glass. The mixture was allowed to stand for one hour at ambient temperature, then the methanol was evaporated at 80°C under reduced pressure for 6 hours. An intermediate powder was obtained.

Step (g.1): The intermediate powder from step (f.1) was mixed with LiOH · H₂O (0.5232 g) in a tube mill (IKA Tube Mill 100 Control; IKA-Werke GmbH & CO. KG) three times at 5000 rpm for one minute each. A mixture was obtained.

An amount of 3.6 g of the above mixture was heated to 660 °C in a muffle oven over a period of 1 h, heating rate of 3 °C. Then, it was allowed to cool naturally. Inventive CAM.1.1 was obtained.

### I.2.2 Manufacture of inventive cathode active material CAM.1.2

Step (g.2): The above protocol was followed but the temperature in the heating step (g.2) was 680°C. Inventive CAM.1.2 was obtained.

### I.2.3 Manufacture of inventive cathode active material CAM.1.3

Step (g.3): The above protocol was followed but the temperature in the heating step (g.3) was 700°C. Inventive CAM.1.3 was obtained.

### I.2.4 Manufacture of inventive cathode active material CAM.1.4

Step (g.4): The above protocol was followed but the temperature in the heating step (g.4) was 720°C. Inventive CAM.1.4 was obtained.

### I.2.5 Manufacture of inventive cathode active material CAM.1.5

Step (f.5): Amounts of 0.277 g Co(NO₃)₂· 6 H₂O and 0.024 g Al(NO₃)₃ · 9 H₂O were dissolved in 1.02 g methanol. The resultant solution was mixed with an amount of 3 g of B-CAM.1 in a mortar. The mixture was allowed to stand for one hour at ambient temperature, then the methanol was evaporated at 80°C under reduced pressure for 6 hours. An intermediate powder was obtained.

Step (g.5): The intermediate powder from step (f.2) was mixed with LiOH · H₂O (0.043 g) in a mortar with a pestle for three minutes. A mixture was obtained.

The above mixture was heated to 700°C in a muffle oven over a period of one hour, heating rate of 3 C/min. Then, it was allowed to cool naturally. Inventive CAM.1.5 was obtained.

### I.2.6 Manufacture of inventive cathode active material CAM.2.1

Step (f.3): An amount of 0.369 g Co(NO₃)₂· 6 H₂O was dissolved in 1.36 g methanol. The resultant solution was mixed with 4 g B-CAM.2 in a mortar. The mixture was allowed to stand for one hour at ambient temperature, then the methanol was evaporated at 80°C under reduced pressure for 6 hours. An intermediate powder was obtained.

Step (g.6): The intermediate powder from step (f.3) was mixed with LiOH · H₂O (0.0537 g) in a mortar with a pestle for three minutes. A mixture was obtained.

The above mixture was heated to 700 °C in a muffle oven over a period of one hour, heating rate of 3 C/min. Then, it was allowed to cool naturally. Inventive CAM.2.1 was obtained.

### I.2.7 Manufacture of comparative cathode active material C-CAM.1.6

Step (g.6): The above protocol was followed but the temperature in the heating step (g.4) was 600°C. Comparative C-CAM.1.6 was obtained.

### I.2.8 Manufacture of comparative cathode active material C-CAM.1.7

Step C-(g.7): The intermediate powder from step (f.1) was mixed with LiOH · H₂O (0.5232 g) in a tube mill (IKA Tube Mill 100 Control; IKA-Werke GmbH & CO. KG) three times at 5000 rpm for one minute each. A mixture was obtained.

An amount of 3.6 g of the above mixture was heated to 600 °C in a muffle oven over a period of 1 h, heating rate of 3 C/min. Then, it was allowed to cool naturally. Comparative C-CAM.1.7 was obtained.

### I.2.9 Manufacture of inventive cathode active material CAM.2.1

Step (f.8): An amount of 0.369 g Co(NO₃)₂· 6 H₂O was dissolved in 1.36 g methanol. The resultant solution was mixed with 4 g B-CAM.2 in a mortar. The mixture was allowed to stand for one hour at ambient temperature, then the methanol was evaporated at 80°C under reduced pressure for 6 hours. An intermediate powder was obtained.

Step (g.8): The intermediate powder from step (f.8) was mixed with LiOH · H₂O (0.0537 g) in a mortar with a pestle for three minutes. A mixture was obtained.

The above mixture was heated to 700 °C in a muffle oven over a period of one hour with heating rate of 3 C/min. Then, it was allowed to cool naturally. Inventive CAM.2.1 was obtained.

**Table 1: Properties of inventive cathode active materials and of comparative cathode active material.**

| CAM | Overall Composition | *x*_{Co,surface} [mol-%] | *d*_{eq} [µm] |
|---|---|---|---|
| CAM.1.1 | LiNi_{0.97}Co_{0.03}O₂ | 37 | 1.2 |
| CAM.1.2 | LiNi_{0.97}Co_{0.03}O₂ | 31 | 1.4 |
| CAM.1.3 | LiNi_{0.97}Co_{0.03}O₂ | 25 | 1.4 |
| CAM.1.4 | LiNi_{0.97}Co_{0.03}O₂ | 12 | 1.4 |
| CAM.1.5 | LiNi_{0.968}Co_{0.03}Al_{0.002}O₂ | 11 | 1.3 |
| CAM.2.1 | LiNi_{0.907}Co_{0.074}Mn_{0.019}O₂ | 21 | 1.4 |
| C-CAM.1.6 | LiNi_{0.97}Co_{0.03}O₂ | tbd | 1.2 |
| C-CAM.1.7 | LiNi_{0.97}Co_{0.03}O₂ | 42 | 1.2 |

### II. Testing of Cathode Active Material

### II.1 Cathode manufacture, general procedure

Amounts of 0.0750 g of polyvinylidene fluoride (Solef^{®} 5130; Solvay GmbH), 0.0750 g of carbon black (Super C65; TIMCAL Ltd.), 2.35 g of inventive CAM (or comparative CAM), and 2.5 g of N-methyl-2-pyrrolidone, as well as ten zirconia beads (diameter: 10 mm) were added to a grinding bowl *(V=* 20 mL; ZrO₂ with steel casing; Fritsch GmbH) in an Ar-filled glovebox (MBraun Inertgassysteme GmbH). The mixture was wet milled for 20 minutes at 400 rpm in a planetary micro-mill (Pulverisette 7; Fritsch GmbH). The final slurries were directly transferred to a glovebox and coated onto aluminum foil (16 µm thickness; MTI Corporation) with a box-type coating bar (200 µm; Erichsen GmbH & Co. KG) at a coating speed of 10 mm s⁻¹ by an automated coater (TQC Sheen Automatic Film Applicator Standard; TQC Sheen GmbH). Electrode sheets were dried in the glovebox overnight. Electrodes were punched to a diameter of 10.95 mm and compressed at 300 MPa for five seconds in a laboratory pellet press (Manual Hydraulic Press; Specac Ltd). The electrodes were additionally dried overnight in a dynamic vacuum at 120°C in a glass oven (Glass Oven B-585; Büchi Labortechnik GmbH). The mean loading of the cathodes was 9.4 mg_{CAM} cm⁻².

### II.2 Electrolyte manufacture

A base electrolyte composition was prepared containing 1 M LiPF₆ in 3:7 by weight ethylene carbonate and ethyl methyl carbonate (EL base 1).

### II.3 Test cell manufacture

Custom-made T cells were built using Swagelok parts (Swagelok Company). Spring-compressed T half-cells were assembled from Li metal foil (battery grade; 11 mm diameter; 450 µm thickness; China Energy Lithium Co., Ltd.), the CAM working electrode (10.95 mm diameter) prepared as described under II.1, and two glass-fiber separators (previously dried at 300 °C for three days in a dynamic vacuum; 11 mm diameter; 250 µm thickness; Glass Microfibres Filter 691; VWR International GmbH) soaked with 60 µL of EL base 1, which is described above (II.2). A Li metal foil reference electrode was placed perpendicular and next to the stack of cathode, anode and the two glass-fiber separators, and itself was separated by a glass fiber separator (10 mm diameter; same specification as above) soaked with 30 µL of EL base 1.

### III Evaluation of cell performance

The performance of the cells was assessed using the T half-cells, the manufacture of which was described in section II.3.

All electrochemical testing was performed at 25°C in a climate chamber (KB 720; Binder GmbH) on a commercial battery testing station (Series 4000; Maccor Inc.). For half-cells, a discharge rate test at varying discharge rates and an additional 20 cycles at a fixed rate were performed. After a rest period of two hours, three conditioning cycles in constant current (CC) mode at a charge and discharge rate of 0.1 C (1 C = 200 mA/g) were carried out. For all cycles, 3.0 V vs. Li⁺/Li and 4.3 V vs. Li⁺/Li were the lower and upper cutoff voltages (potential control against the Li reference electrode), respectively. Afterwards, a rate test with discharge rates of 0.2 C, 0.5 C, 1 C, 2 C, 5 C, and 10 C was conducted where the charge was done with a constant current of 0.5 C (0.2 C for the 0.2 C discharge) and a constant voltage (CV) step until the current dropped below 0.1 C. The discharge at various rates was performed in CC mode until the lower cutoff voltage was reached. At each rate, two consecutive cycles were performed with rest periods of ten minutes between every charge and discharge period. Following the rate test, three check-up cycles at a charge and discharge rate of 0.1 C were performed in CC mode. Then, for twenty cycles, the cell was charged in CCCV mode (cutoff current of 0.1 C) with 0.5 C and discharged in CC mode with 1 C. The half-cell testing procedure finished with a check-up procedure as described above. The results are summarized in Table 2.

Batteries based on inventive cathode active materials are superior. In particular, CAM.1.1, CAM.1.2, CAM.1.3, CAM.1.4, CAM.1.5, CAM.1.6, and CAM.2.1 demonstrate increased capacity retention compared to C-CAM.1.6 and C-CAM.1.7, and thus a higher cycle life.

**Table 2: Electrochemical half-cell testing.**

| CAM | Discharge Capacity after 9 cycles [mAh/g] | Discharge Capacity after 38 cyclers [mAh/g] | Capacity fade [%] |
|---|---|---|---|
| CAM.1.1 | 195.0 | 182.8 | 93.7 |
| CAM.1.2 | 197.7 | 186.8 | 94.5 |
| CAM.1.3 | 199.4 | 188.1 | 94.4 |
| CAM.1.4 | 199.6 | 189.5 | 94.9 |
| CAM.1.5 | 198.5 | 188.3 | 94.9 |
| CAM.2.1 | 184.1 | 172.5 | 93.7 |
| C-CAM.1.6 | 187.8 | 158.1 | 84.2 |
| C-CAM.1.7 | 192.4 | 177.3 | 92.2 |

## Claims

1. Particulate cathode active materials having a core of the composition Li_{(1+z)}TM_{(1-z)}O₂ wherein z is in the range of from -0.05 to +0.02 and TM is Ni_{1-x-y}CoₓM_{y}, and zero ≤ x ≤ 0.05 and zero ≤ y ≤ 0.10 and M is selected from at least one of Mn or Al, wherein Co is enriched at the outer surface of the core of said cathode active material particles that are in the form of single crystals with an equivalent particle diameter *d*_{eq} of at least 0.5 µm and up to 5 µm.

2. Particulate cathode active material according to claim 1 wherein the equivalent particle diameter *d*_{eq} is from 0.5 to 2.5 µm.

3. Particulate cathode active material according to claim 1 or 2 wherein the Co atomic surface concentration *x*_{Co,surface} as measured by X-ray photoelectron spectroscopy is at least 10 mol-%, referring to the metals other than lithium in the shell.

4. Particulate cathode active material according to any of the claims 1 to 3 wherein the Co atomic surface concentration *x*_{Co,surface} as measured by X-ray photoelectron spectroscopy is at least 11 mol-%, referring to the metals other than lithium in the shell.

5. Particulate cathode active material according to any of the claims 1 to 4 wherein the maximum Co atomic surface concentration (*x*_{Co,surface}) as measured by X-ray photoelectron spectroscopy is *x*_{Co,surface} is 40 mol-%, referring to the metals other than lithium in the shell.

6. Particulate cathode active material according to any of the claims 1 to 5 that additionally shows an enrichment of aluminum at the outer surface.

7. Process for the manufacture of a cathode active material according to any of the claims 1 to 6, wherein said process comprises the following steps:
(a) Providing a hydroxide TM(OH)₂, wherein said hydroxide has an average particle diameter (d50) in the range of 1 to 16 µm and TM is as defined above,
(b) mixing said hydroxide TM(OH)₂ with a Li source wherein the molar ratio of Li/TM is in the range of 0.98 to 1.05,
(c) heat-treating the mixture obtained from step (b) at a temperature in the range of 700 to 900 °C, thereby obtaining an intermediate powder,
(d) wet milling of the intermediate powder obtained from step (c) in an aqueous or alcoholic solvent in a ball mill, followed by a drying step, thereby obtaining a deagglomerated intermediate powder,
(e) heat-treating the deagglomerated intermediate powder obtained from step (d) at a temperature in the range of 580 to 770 °C, thereby obtaining a base cathode active material,
(f) combining a source of Co dissolved in alcoholic solvent with the base cathode active material obtained from step (e) by incipient-wetness impregnation, aiming at an overall average cobalt composition of up to 7.5 mol% with respect TM, and a subsequent drying step, thereby obtaining another intermediate powder, and, optionally,
(g) mixing said intermediate powder from step (f) with a Li source wherein the molar ratio of Li/Co with respect to the molar amount of Co from step (f) is in the range of 0.98 to 1.02, followed by a heat-treatment step at 650 to 750°C.

8. Process according to claim 7 wherein in step (b) the molar ratio of Li to TM is in the range from 1.01 to 1.03.

9. Process according to claim 7 or 8 wherein the molar ratio of Li to Co in step (f) is from 0.99 to 1.00.

10. Cathode containing
(A) at least one particulate cathode active material according to any of the claims 1 to 6,
(B) carbon in electrically conductive form, and
(C) a binder material.

11. Battery containing
(1) at least one cathode according to claim 10,
(2) at least one anode, and
(3) at least one electrolyte.
